Europäisches Patentamt

European Patent Office

Office européen des brevets

(19)

(11) Publication number: **0 055 420**

A2

(12) **EUROPEAN PATENT APPLICATION**

(21) Application number: 81110467.8

(22) Date of filing: 15.12.81

(51) Int. Cl.³: **G 01 S 13/60**

(30) Priority: 27.12.80 JP 188270/80

(43) Date of publication of application:
07.07.82 Bulletin 82/27

(84) Designated Contracting States:
DE FR GB

(71) Applicant: NISSAN MOTOR COMPANY, LIMITED
No.2, Takara-cho, Kanagawa-ku
Yokohama-shi Kanagawa-ken 221(JP)

(72) Inventor: Tachibana, Akira
No. 4-79, Taura-cho
Yokosuka City(JP)

(72) Inventor: Fujiki, Norio
No. 410, Noba-cho Konan-ku
Yokohama City(JP)

(74) Representative: Ter Meer-Müller-Steinmeister
Patentanwälte
Triftstrasse 4
D-8000 München 22(DE)

(54) A shielding arrangement for a radar type ground speed sensor.

(57) A shield (10) is mounted beneath a vehicle in the path of a horizontally moving side lobe (B) either as it is emitted from the radar antenna (2) or after it has undergone a first reflection. The shield (10) deflects the side lobe (B) down onto the road surface (5) at an angle which induces attenuating multiple reflection thereof between the bottom of the vehicle and the road surface. This permits a relatively high power main beam (A) while reducing the "noise" emitted from beneath the vehicle.

*FIG.3*

EP 0 055 420 A2

- 1 -

DESCRIPTION

The present invention relates generally to a vehicle speed sensor of the type utilizing a doppler radar and more specifically to a shielding arrangement therefore which reduces the amount of electromagnetic noise emitted from beneath the vehicle.

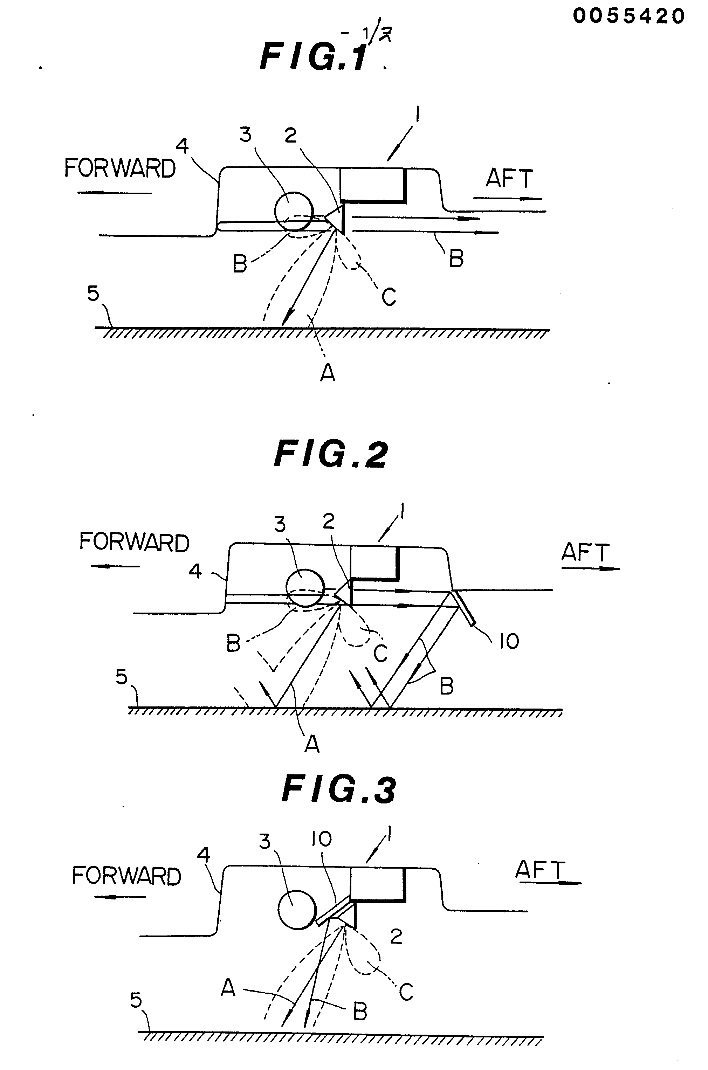

In a previously disclosed arrangement it has been proposed to mount a doppler radar ground speed sensor beneath a vehicle so as to accurately determine the actual speed or velocity of the vehicle. This arrangement as shown in Fig. 1 of the drawings, includes an antenna 2 which emits a doppler type radar beam and which is mounted by way of example, adjacent a drive or stub shaft 3 of the vehicle and beneath the floor panel 4 thereof. As shown , the floor panel 4 is formed with a drive shaft tunnel in which the speed sensor is received. The antenna 2 is oriented to emit a main beam A either obliquely forward or rearwardly of the vehicle to impinge on the road surface 5 and thereafter be reflected in part back to the antenna 2.

- 2 -

With this arrangement the frequency difference between the emitted main beam and the reflected beam or echo picked up by the antenna 2 is utilized to determine the vehicle speed. The portion of the main beam A not picked up by the antenna 2 is dissipated via multiple reflections between the road surface 5 and the bottom of the vehicle so that the portion of the main beam A emitted from beneath the vehicle has a very low energy level. However, on the other hand, one of the two major side lobe waves B tends to move horizontally due to the orientation of the antenna and accordingly tends to be reflected by a vertical wall section forming part of the drive shaft tunnel and/or the drive shaft. Because of the horizontal nature of this side lobe wave, very little attenuation thereof due to multiple refelections tends to occur resulting in a relatively high energy radar beam being emitted from beneath the vehicle. This tendency is further compounded by the fact that any reflections which the side lobe wave does undergo are on metallic surfaces which tend to absorb very little energy. Furthermore, on wet days or when the road surface is wet, the amount of energy emitted from beneath the vehicle tends to increase markedly as the wet surfaces tend not to absorb as much energy as normal whereby the main beam adds to the level of electromagnetic noise emitted to the environment surrounding the vehicle.

In order to prevent the emission of such "noise" to nearby vehicles which may also be utilizing radar equipped apparatus, it has been proposed to either, reduce the the strength of the radar beam or narrow the frequency window thereof, so as to reduce the amount of noise that is apt to be emitted from beneath the vehicle and cause interference with nearby radar systems. However, this measure has required that the circuitry for producing the narrow frequency band beam and/or processing the weak echo from the reduced strength main beam picked up by the antenna, be very complex and accordingly expensive.

The present invention features a shield or reflection arrangement which is mounted beneath a vehicle so as to intercept the horizontally moving side lobe wave either as it is emitted from the antenna or after it has been reflected, and direct same obliquely down onto the road surface where it, like the main beam undergoes multiple reflection and thus undergoes energy dissipation. With this arrangement the noise emitted to the enviroment is attenuated while the strength of the main beam may maintained at a level enabling relatively simple circuitry to be used.

The features and advantages of the arrangement of the present invention will become more clearly appreciated from the following description taken in conjunction with the accompanying drawings in which

Fig. 1 is a schematic elevation of the prior art arrangement discussed the opening paragraphs of the specificaton,

Fig. 2 is a schematic elevation of a first embodiment of the present invention;

Fig. 3 is a schematic elevation of a second embodiment of the present invention;

Fig. 4 is a schematic elevation of a third embodiment of the present invention; and

Fig. 5 is a schematic elevation showing a fourth embodiment of the present invention.

Turning now to Fig. 2 of the drawings we find an arrangement which is essentially similar to that shown in Fig. 1, wherein a radar type ground speed sensor 1 is disposed adjacent a drive shaft 3 of the vehicle and below the floor panel 4. In this embodiment however, a shield or reflector 10 is disposed in the path of the reflected side lobe wave B and oriented at angle suitable for reflecting the wave down onto the road surface, whereafter it undergoes attenuation via multiple reflection similar to the case of the main beam. The other side lobe C (indicated in phantom) tends to radiate toward the road surface at an angle which ensures that it will also undergo multiple reflection and is thus of no concern.

Fig. 3 shows a second embodiment of the present invention wherein the shield or reflector 10 is disposed immediately adjacent the antenna 2 so as to intercept and reflect the side lobe B before undergoing a reflection on any nearby surfaces. The side lobe B is as in the first embodiment, is caused to impinge on the surface of the road in a manner to undergo multiple reflections along with the main beam A. This arrangement has the advantage that the side lobe B does not tend to scatter to the degree which is apt to occur with the first arrangement (due to the first reflection on a possibly non uniform surface).

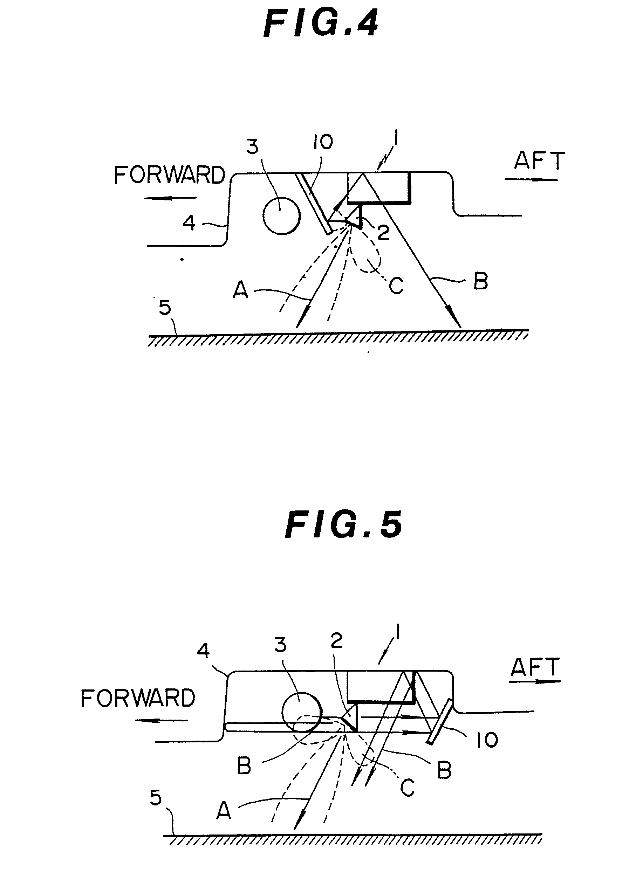

Fig. 4 shows a third embodiment of the present invention wherein the shield or reflector 10 is disposed immediately adjacent the antenna 2 but oriented to redirect the side lobe B up against the floor panel 4 of the vehicle to undergo a first attenuating reflection thereon. The angle of incidence of the lobe of the floor panel is such the reflection moves toward the road surface at an angle suitable for having the beam perform

0055420

- 6 -

further multiple reflections as the main beam A.

The fourth embodiment shown in Fig. 5, features a shield or reflector 10 which is mounted in a position similar to the first embodiment but oriented to, like the third embodiment, direct the side lobe B up against the floor panel 4 of the vehicle to undergo the first attenuating reflection thereon. The side lobe after impinging on the floor panel 4 then tends toward the road surface 5 at angle which induces multiple reflections between it and the lower surface of the vehicle.

In order the increase the attenuation of the side lobe B it is of course possible and advantageous to form the shield 10 from a material or provide a surface thereon which has radar frequency radiation absorbing properites.

It is further within the scope of the present invention to utilize more than one shield and dispose same in locations other than those disclosed.

The shield or shields apart from attenuating noise emitted from beneath the vehicle also function to prevent external noise from interfering with speed sensor thus adding to the reliablity of same.

CLAIMS

1. A ground speed sensor for an automotive vehicle, comprising a radar having an antenna which is oriented to direct a main radar beam obliquely down onto a road surface, c h a r a c t e r i z e d by means (10) for attenuating a side lobe (B) emitted from said antenna (2) which side lobe (B) tends to move horizontally beneath the vehicle, said attenuating means (10) reflecting said side lobe (B) to undergo multiple reflections between the lower surface of the vehicle and the road surface.

2. A ground speed sensor as claimed in claim 1, c h a r a c t e r i z e d in that said attenuation means is a reflector (10) mounted so as to intercept said side lobe (B) and direct same down onto said road surface.

3. A ground speed sensor as claimed in claim 1, c h a r a c t e r i z e d in that said attenuation means is a reflector (10) which intercepts said side lobe (B) and directs same up against the lower surface of said vehicle.

4. A ground speed sensor as claimed in claim 2 or 3, c h a r a c t e r i z e d in that said reflector is disposed to intercept said side lobe (B) after it undergoes the first reflection on an essentially vertical surface (4) of said vehicle.

# FIG.1

FORWARD     AFT

B

C

5

A

# FIG.2

FORWARD     AFT

B

10

B

C

5

A

# FIG.3

FORWARD     AFT

A

B

C

5

- 2/2
# FIG.4

FORWARD                    AFT

3   10   1

4

A        C        B

5

# FIG.5

FORWARD                    AFT

4   3   2   1

B   C   B

10

A

5